# EUROPÄISCHE PATENTSCHRIFT

(11) **EP 1 947 876 B1**
(45) Veröffentlichungstag und Bekanntmachung des Hinweises auf die Patenterteilung: **24.12.2014**
(21) Anmeldenummer: 08000466.6
(22) Anmeldetag: 11.01.2008
(51) Int. Cl.: H04W 8/18, H04M 3/42, H04W 4/16, H04W 12/08

(54) **Betrieb von mobilen Endgeräten, mobiles Endgerät und Mobilfunkteilnehmer-Identifikations-Modul zur Nutzung mit einem mobilen Endgerät**
Operation of mobile terminals, mobile terminal and mobile phone user identification module for use with a mobile terminal
Fonctionnement de terminaux mobiles, terminal mobile et module d'identification d'abonnés d'un réseau hertzien mobile pour utiliser avec un terminal mobile

(30) Priorität: 16.01.2007 DE 102007003094
(43) Veröffentlichungstag der Anmeldung: 23.07.2008
(73) Patentinhaber: Vodafone Holding GmbH, 40213 Düsseldorf (DE)
(72) Erfinder: Liss, Peter, 40213 Düsseldorf (DE)
(74) Vertreter: Weisbrodt, Bernd

(56) Entgegenhaltungen:
- WO-A-02/51182
- WO-A-92/19078
- DE-A1- 19 828 735
- US-A1- 2003 139 192
- US-A1- 2005 107 114
- US-B1- 6 311 063
- NOKIA: "Clarification of service profile", 3GPP DRAFT; S2-022348, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Toronto; 20020814, 14 August 2002 (2002-08-14), XP050239687, [retrieved on 2002-08-14]

## Beschreibung

Die vorliegende Erfindung betrifft ein Verfahren gemäß Anspruch 1 zum Betreiben eines in einem Mobilfunknetz, insbesondere gemäß einem GSM-, GPRS- und/oder UMTS-Funknetzstandard, nutzbaren mobilen Endgerätes, wobei ein authentifizierender Zugang des mobilen Endgerätes zu dem Mobilfunknetz unter Nutzung eines Mobilfunkteilnehmer-Identifikations-Moduls, einer sogenannten SIM-Karte (SIM: Subscriber Identity Module), erfolgt.

Gegenstand der vorliegenden Erfindung ist fener ein mobiles Endgerät gemäß Anspruch 14 zur Nutzung in einem Mobilfunknetz, insbesondere gemäß einem GSM-, GPRS- und/oder UMTS-Funknetzstandard, mit wenigstens einer Anzeigeeinheit zur Wiedergabe von optischen und/oder akustischen Informationen und/oder Signalen, wenigstens einer Eingabeeinheit zur Erfassung von optischen und/oder akustischen Informationen und/oder Signalen, einer Speichereinheit zur Speicherung von nutzerindividuellen Einstellungen und/oder Funktionen zur Nutzung des mobilen Endgerätes und/oder von Kommunikationsdiensten des Mobilfunknetzes und einem einen authentifizierenden Zugang zu dem Mobilfunknetz ermöglichenden Mobilfunkteilnehmer-Identifikations-Modul (SIM-Karte).

Die Erfindung betrifft ferner ein Mobilfunkteilnehmer-Identifikations-Modul gemäß Anspruch 18 zur Nutzung mit einem mobilen Endgerät, welche ausgebildet und/oder eingerichtet sind, das erfindungsgemäßes Verfahren auszuführen.

Im Stand der Technik sind verschiedene Verfahren und Vorrichtungen zum Betrieb von in Mobilfunknetzen nutzbaren mobilen Endgeräten bekannt.

Dokument US 2005/0107114 A1 offenbart ein Mobilfunktelefon, welches von mehreren verschiedenen Nutzern zu unterschiedlichen Zeiten genutzt werden kann. Entsprechenden Eingabeaufforderungen des Mobilfunktelefons folgend kann ein Nutzer ein ihm zugewiesenes Nutzerprofil lokal aktivieren und das Mobilfunktelefon mit diesem Nutzerprofil nutzen. Das jeweilige Nutzungsprofil umfasst dabei insbesondere ein personalisiertes Adressbuch sowie Zugriffsrechte auf Spiele und Anwendungen des Mobilfunktelefons.

Die Nutzung von mobilen Endgeräten ist insbesondere für den Nutzer in Entwicklungsländern, aber auch für einkommensschwache Nutzer zu kostenintensiv, insbesondere aufgrund der relativ hohen Anschaffungskosten für mobile Endgeräte selbst. Vor diesem Hintergrund teilen sich insbesondere in Entwicklungsländern mehrere Mobilfunkteilnehmer gemeinsam ein mobiles Endgerät, beispielsweise innerhalb einer Familie oder dergleichen Gruppierungen. Um dem Bedürfnis einer individualisierten Nutzung nachkommen zu können, wird mit dem in einer entsprechenden Gruppierung von Nutzern genutzten mobilen Endgerät für jeden Nutzer beziehungsweise Mobilfunkteilnehmer ein separates Mobilfunkteilnehmer-Identifikations-Modul, eine sogenannte SIM-Karte, genutzt.

Nachteilig ist dabei, dass neben den mit einem solchen Mobilfunkteilnehmer Identifikations-Modul verbundenen Kosten jeweils nur eine Nutzung eines Mobilfunkteilnehmer-Identifikations-Moduls mit einem mobilen Endgerät ermöglicht wird, so dass eine Erreichbarkeit der sich ein mobiles Endgerät teilenden Nutzer individuell nicht ermöglicht wird.

Nachteilig ist darüber hinaus das Erfordernis eines ständigen Wechselns des Mobilfunkteilnehmer-Identifikations-Moduls seitens des mobilen Endgerätes durch die jeweiligen Nutzer, welches ferner das Risiko einer Beschädigung der Mobilfunkteilnehmer-Identifikations-Module sowie des mobilen Endgerätes erhöht.

Vor diesem Hintergrund liegt der vorliegenden Erfindung die Aufgabe zugrunde, auf einfache und kostengünstige Art und Weise einen vereinfachten nutzerindividuellen Betrieb eines mobilen Endgerätes in einem Mobilfunknetz zu ermöglichen.

Zur technischen Lösung wird mit der vorliegenden Erfindung ein Verfahren zum Betreiben eines in einem Mobilfunknetz, insbesondere gemäß einem GSM-, GPRS- und/oder UMTS-Funknetzstandard, nutzbaren mobilen Endgerätes, wobei ein authentifizierender Zugang des mobilen Endgerätes zu dem Mobilfunknetz unter Nutzung eines Mobilfunkteilnehmer-Identifikations-Moduls erfolgt, vorgeschlagen, welches dadurch gekennzeichnet ist, dass zumindest seitens des mobilen Endgerätes zwischen wenigstens zwei Nutzern des mobilen Endgerätes unterschieden wird.

Der Erfindung liegt die Erkenntnis zugrunde, dass bei einem mobilen Endgerät, welches ein Mobilfunkteilnehmer-Identifikations-Modul für einen authentifizierenden Zugang zum Mobilfunknetz erhält, durch eine zumindest seitens des mobilen Endgerätes erfolgende Unterscheidung zwischen wenigstens zwei Nutzern des mobilen Endgerätes bei Nutzung lediglich eines Mobilfunkteilnehmer-Identifikations-Moduls (SIM-Karte) seitens des mobilen Endgerätes auf einfache und kostengünstige Art und Weise ein vereinfachter nutzerindividueller Betrieb des mobilen Endgerätes im Mobilfunknetz für wenigstens zwei Nutzer ermöglicht wird.

Das mobile Endgerät ist von wenigstens zwei Nutzern mit jeweils nutzerindividuellen Einstellungen und/oder Funktionen zur Nutzung des mobilen Endgerätes und/oder zur Nutzung von Kommunikationsdiensten des Mobilfunknetzes nutzbar, wobei während deckungsgleicher Zeiteinheiten eine Nutzung des mobilen Endgerätes nur für einen Nutzer ermöglicht wird. Die erfindungsgemäße Ausgestaltung ermöglicht so eine hinsichtlich der Individualität weiter gesteigerte Nutzung des mobilen Endgerätes für den jeweiligen Nutzer des mobilen Endgerätes im Mobilfunknetz. So können sich mehrere Nutzer ein mobiles Endgerät teilen und dennoch ihre individuellen und/oder privaten Einstellungen und/oder Funktionen und/oder Kommunikationsdienste des Mobilfunknetzes nutzen.

Die Erfindung sieht vor, dass die Unterscheidung zwischen den Nutzern anhand wenigstens einer den jeweiligen Nutzern eindeutig zugeordneten Kennung erfolgt. Vorteilhafterweise erfolgt die Unterscheidung zwischen den Nutzern anhand wenigstens einer der den jeweiligen Nutzern seitens des mobilen Endgerätes zugeordneten nutzerindividuellen Einstellungen und/oder Funktionen zur Nutzung des mobilen Endgerätes und/oder zur Nutzung von Kommunikationsdiensten des Mobilfunknetzes. Erfindungsgemäß werden so Nutzerprofile für die Unterscheidung verwendet.

Eine weitere vorteilhafte Ausgestaltung der Erfindung sieht vor, dass die Kennung und/oder die nutzerindividuellen Einstellungen und/oder Funktionen zur Nutzung des mobilen Endgerätes und/oder zur Nutzung von Kommunikationsdiensten des Mobilfunknetzes durch wenigstens eine Betätigungseingabe seitens einer Eingabeeinheit des mobilen Endgerätes aktiviert werden, wobei im Rahmen der Betätigungseingabe vorzugsweise die Eingabe eines nutzerindividuellen Codes erfolgt.

Die Erfindung sieht vor, dass die Kennung und/oder die nutzerindividuellen Einstellungen und/oder Funktionen zur Nutzung des mobilen Endgerätes und/oder zur Nutzung von Kommunikationsdiensten des Mobilfunknetzes durch Nutzung wenigstens eines seitens des mobilen Endgerätes eingehenden Kommunikationsdienstes des Mobilfunknetzes und/oder einer seitens des mobilen Endgerätes eingehenden Nachricht eines Kommunikationsdienstes des Mobilfunknetzes aktiviert werden.

Durch die Kennung eine Unterscheidung des Nutzers des mobilen Endgerätes seitens des Mobilfunknetzes ermöglicht. In einer bevorzugten Ausgestaltung der Erfindung werden zur mobilfunknetzseitigen Unterscheidung seitens des Mobilfunknetzes die Kennungen des jeweiligen Nutzers dem Mobilfunkteilnehmer-Identifikations-Modul (SIM-Karte) zugeordnet, vorzugsweise in wenigstens einer mobilfunknetzseitigen Datenbank zur Erfassung und/oder Verwaltung von Mobilfunkteilnehmer-Identifikations-Modulen (SIM-Kar:en). In einer weiteren bevorzugten Ausgestaltung der Erfindung wird die Kennung im Rahmen der Nutzung von Kommunikationsdiensten des Mobilfunknetzes von dem mobilen Endgerät an das Mobilfunknetz beziehungsweise von dem Mobilfunknetz an das mobile Endgerät übertragen.

Eine weitere vorteilhafte Ausgestaltung der Erfindung sieht vor, dass die von dem mobilen Endgerät an das Mobilfunknetz übertragene Kennung mobilfunknetzseitig wenigstens einem Vergleich mit wenigstens einer der in der mobilfunknetzseitigen Datenbank im Zusammenhang mit dem Mobilfunkteilnehmer-Identifikations-Modul erfassten und verwalteten Kennungen unterzogen wird, vorzugsweise seitens einer die wenigstens eine mobilfunknetzseitige Datenbank nutzenden Recheneinrichtung des Mobilfunknetzes. Gemäß einem weiteren vorteilhaften Vorschlag der Erfindung wird die von dem Mobilfunknetz an das mobilen Endgerät übertragene Kennung seitens des mobilen Endgerätes, vorzugsweise seitens des Mobilfunkteilnehmer-Identifikations-Moduls des mobilen Endgerätes, wenigstens einem Vergleich mit wenigstens einer der seitens des mobilen Endgerätes, vorzugsweise seitens des Mobilfunkteilnehmer-Identifikations-Moduls des mob:len Endgerätes, erfassten und verwalteten Kennungen unterzogen. Die erfindungsgemäßen Ausgestaltungen der erfindungsgemäßen Kennungen erlauben einzeln und/oder in Kombination eine sichere und umfangreiche Unterscheidung des jeweiligen Nutzers des mobilen Endgerätes seitens des Mobilfunknetzes und ermöglicht so einen weiter vereinfachten nutzerindividuellen Betrieb eines mobilen Endgerätes in einem Mobilfunknetz für die jeweiligen Nutzer des mobilen Endgerätes.

Eine weitere vorteilhafte Ausgestaltung der Erfindung sieht vor, dass zumindest bei einer Nutzung des mobilen Endgerätes für Kommunikationsdienste des Mobilfunknetzes durch einen ersten Nutzer bei an wenigstens einen anderen eingerichteten Nutzer des mobilen Endgerätes gerichtete Kommunikationsdienste eine Nichterreichbarkeit des wenigstens einen anderen eingerichteten Nutzers des mobilen Endgerätes signalisiert wird, vorzugsweise seitens des mobilen Endgerätes oder seitens des Mobilfunknetzes. Vorteilhafterweise werden bei Nichterreichbarkeit des wenigstens einen anderen eingerichteten Nutzers des mobilen Endgerätes an den wenigstens einen anderen eingerichteten Nutzer des mobilen Endgerätes gerichtete Kommunikationsdienste mobilfunknetzseitig auf eine Anrufbeantworterfunktionalität des wenigstens einen anderen Nutzers des mobilen Endgerätes weitergeleitet. Erfindungsgemäß werden so für den einen anderen eingerichteten Nutzer des mobilen Endgerätes im Nichterreichbarkeitsfalle an ihn gerichtete Kommunikationsdienste erfasst und zu einem späteren Zeitpunkt, vorzugsweise bei Wiedererreichbarkeit des wenigstens einen anderen eingerichteten Nutzers, dem wenigstens einen anderen eingerichteten Nutzer signalisiert beziehungsweise mitgeteilt.

Eine weitere vorteilhafte Ausgestaltung der Erfindung sieht vor, dass bei kennungslos oder für mehrere Kennungen gültige an das mobile Endgerät gerichtete Kommunikationsdienste des Mobilfunknetzes eine Nutzung des mobilen Endgerätes für alle Nutzer oder die Nutzer der jeweiligen Kennungen ermöglicht wird. Vorteilhafterweise werden kennungslose und/oder für mehrere Kennungen gültige Nutzungen des mobilen Endgerätes als weitere Kennung für alle Nutzer des mobilen Endgerätes oder die jeweiligen Nutzer des mobilen Endgerätes eingerichtet.

Gemäß einer weiteren vorteilhaften Ausgestaltung der Erfindung erfolgt eine Erkennung des jeweiligen Nutzers, für welchen Kommunikationsdienste des Mobilfunknetzes seitens des mobilen Endgerätes eingehen anhand einer Authentisierung des Nutzers. Eine entsprechende Authentisierung erfolgt vorteilhafterweise seitens des mobilen Endgerätes selbst und/oder seitens des Mobilfunknetzes. Eine besonders bevorzugte Ausgestaltung der Erfindung ist gekennzeichnet durch eine mittels Sprachanalyse erfolgende Authentisierung des jeweiligen Nutzers.

Zur technischen Lösung der eingangs genannten Aufgabe wird mit der vorliegenden Erfindung ferner ein mobiles Endgerät zur Nutzung in einem Mobilfunknetz, insbesondere gemäß einem GSM-, GPRS- und/oder UMTS-Funknetzstandard, mit wenigstens einer Anzeigeeinheit zur Wiedergabe von optischen und/oder akustischen Informationen und/oder Signalen, wenigstens einer Eingabeeinheit zur Erfassung von optischen und/oder akustischen Informationen und/oder Signalen und/oder zur Steuerung von Funktionen des mobilen Endgerätes, einer Speichereinheit zur Speicherung von nutzerindividuellen Einstellungen und/oder Funktionen zur Nutzung des mobilen Endgerätes und/oder zur Nutzung von Kommunikationsdiensten des Mobilfunknetzes, sogenanntes Nutzerprofil, und einem einen authentifizierenden Zugang zu dem Mobilfunknetz ermöglichenden Mobilfunkteilnehmer-Identifikations-Modul, sogenannte SIM-Karte, vorgeschlagen, welches dadurch gekennzeichnet ist, dass dieses von wenigstens zwei Nutzern mit jeweils nutzerindividuellen Einstellungen und/oder Funktionen zur Nutzung des mobilen Endgerätes und/oder zur Nutzung von Kommunikationsdiensten des Mobilfunknetzes nutzbar ist, wobei während deckungsgleicher Zeiteinheiten eine Nutzung des mobilen Endgerätes nur für einen Nutzer ermöglicht ist.

Eine weitere vorteilhafte Ausgestaltung der Erfindung ist gekennzeichnet durch eine Einrichtung zur Erfassung, Verwaltung und/oder Unterscheidung von Nutzern des mobilen Endgerätes, vorzugsweise anhand einer dem jeweiligen Nutzer zugeordneten Kennung und/oder anhand nutzerindividueller Einstellungen und/oder Funktionen zur Nutzung des mobilen Endgerätes und/oder zur Nutzung von Kommunikationsdiensten des Mobilfunknetzes.

Eine weitere vorteilhafte Ausgestaltung der Erfindung sieht vor, dass die Kennung und/oder die nutzerindividuellen Einstellungen und/oder Funktionen zur Nutzung des mobilen Endgerätes und/oder zur Nutzung von Kommunikationsdiensten des Mobilfunknetzes durch wenigstens eine Betätigungseingabe seitens der Eingabeeinheit des mobilen Endgerätes aktivierbar ist, vorzugsweise durch Betätigung einer dafür vorgesehenen und eingerichteten Taste der Betätigungseinheit, besonders bevorzugt in Kombination mit der Eingabe eine nutzerindividuellen Codes.

Das erfindungsgemäße mobile Endgerät ist ausgebildet und/oder eingerichtet, die seitens eines mobilen Endgeräts ausführbaren Verfahrensschritte eines Verfahrens nach einem der Ansprüche 1-13 auszuführen.

Zur technischen Lösung der eingangs genannten Aufgabe wird mit der vorliegenden Erfindung ferner ein Mobilfunkteilnehmer-Identifikations-Modul, vorzugsweise in Form einer sogenannten SIM-Karte, vorgeschlagen, welches einem in einem Mobilfunknetz nutzbaren mobilen Endgerät, vorzugsweise einem erfindungsgemäßen mobilen Endgerät, einen authentifizierenden Zugang zu einem Mobilfunknetz, insbesondere gemäß einem GSM-, GPRS- und/oder UMTS-Funknetzstandard, ermöglicht, welches ausgebildet und/oder eingerichtet ist, ein erfindungsgemäßes zumindest teilweise auszuführen.

Ein entsprechendes erfindungsgemäßes Mobilfunkteilnehmer-Identifikations-Modul gemäß anspruch 18 ermöglicht eine erfindungsgemäße Nutzung im Zusammenhang mit bereits bestehenden in einem Mobilfunknetz betreibbaren mobilen Endgeräten. Erfindungsgemäß können so bereits existierende mobile Endgeräte von mehreren Nutzern mit entsprechenden nutzerindividuellen Einstellungen und dem gebotenen und bisher gegebenen Maß an Privatsphäre genutzt werden. Erfindungsgemäß ist so ein entsprechendes Teilen von mobilen Endgeräten durch mehrere Nutzer ermöglicht.

Weitere Einzelheiten, Merkmale und Vorteile der Erfindung werden nachfolgend anhand des in der Figur der Zeichnung dargestellten Ausführungsbeispiels näher erläutert. Dabei zeigt:

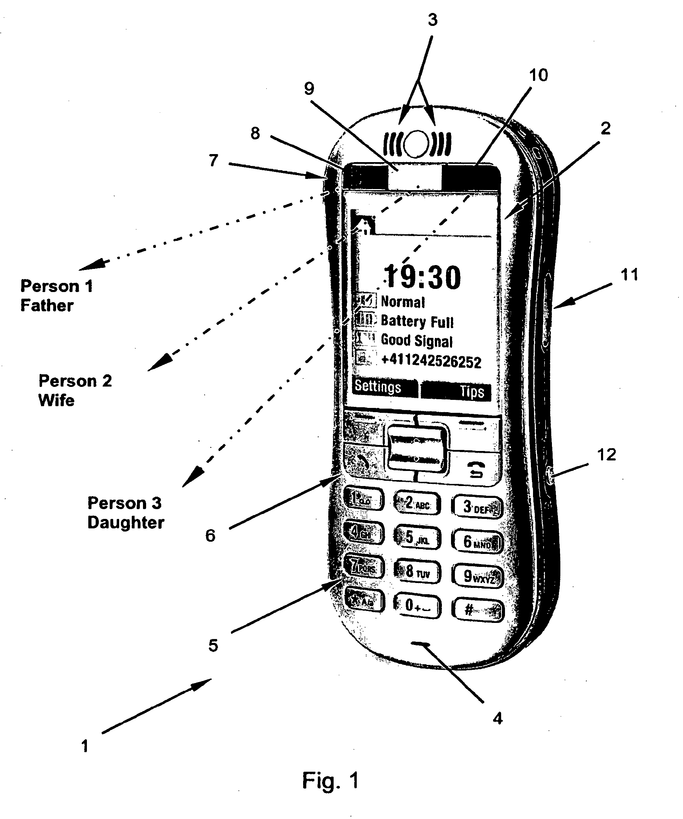

- Fig.1: in einer schematisch perspektivischen Darstellung ein mobiles Endgerät zur Nutzung in einem Mobilfunknetz, welches gemäß einem erfindungsgemäßen Verfahren betreibbar ist.

Fig. 1 zeigt ein in einem Mobilfunknetz gemäß einem GSM-, GPRS- und/oder UMTS-Funknetzstandard nutzbares mobiles Endgerät 1 in Form eines Mobilfunktelefons 1. Das Mobilfunktelefon 1 weist ein Display 2 als Anzeigeeinheit zur Wiedergabe von optischen Informationen und/oder Signalen, einen Lautsprecher 3 als Anzeigeeinheit zur Wiedergabe von akustischen Informationen und/oder Signalen, ein Mikrofon 4 als Eingabeeinheit zur Erfassung von akustischen Informationen und/oder Signalen sowie eine Tastatur 5, eine Tastatur 6 und eine Tastatur 7 als Eingabeeinrichtung zur Erfassung von Informationen und/oder zur Steuerung von Funktionen des mobilen Endgerätes 1 auf.

Die Eingabeeinheiten 5, 6 und 7 des Mobilfunktelefons 1 weisen jeweils mehrere betätigbare Tasten auf. Die zwölf Tasten der Eingabeeinheit 5 dienen zur Erfassung von Informationen durch Eingabe von einzelnen Zeichen, beispielsweise Ziffern und/oder Buchstaben, durch entsprechende Tatenbetätigung.

Die sechs Tasten der Eingabeeinheit 6 dienen zur Steuerung von und/oder durch Funktionen beziehungsweise Funktionalitäten des Mobilfunktelefons 1, beispielsweise zur Gesprächsannahme, Gesprächsbeendigung, Menüauswahl und/oder dergleichen Funktionalitäten beziehungsweise Funktionen des Mobilfunktelefons 1. Die mittlere Taste der als Eingabeeinheit 6 dienenden Tastatur 6 ist dabei vorliegend als zwischen zwei Positionen kippbare Taste ausgebildet und erlaubt in entsprechenden Anwendungen des Mobilfunktelefons 1 ein sogenanntes Blättern beziehungsweise Scrollen, insbesondere für eine weitergehende Menü- und/oder Funktionsauswahl in beziehungsweise durch seitens des Mobilfunktelefons 1 implementierten Anwendung.

Die drei nebeneinander angeordneten Tasten 8, 9 und 10 der Eingabeeinheit 7 dienen vorliegend zu einer zumindest seitens des Mobilfunktelefons 1 erfolgenden Unterscheidung zwischen Nutzern des Mobilfunktelefons 1, wobei während deckungsgleicher Zeiteinheiten eine Nutzung des Mobilfunktelefons 1 mit nutzerindividuellen Einstellungen und/oder Funktionen und/oder zur Nutzung von nutzerindividuellen Kommunikationsdiensten des Mobilfunknetzes, in welchem das Mobilfunktelefon 1 betrieben wird, ermöglicht wird.

Das Mobilfunktelefon 1 weist weiter einen an einer Gehäuseseite seitlich des Displays 2 angeordneten Schalter 11 zur Einstellung der Lautstärke des Lautsprechers 3 auf. Unterhalb des Schalters 11 beanstandet von diesem weist das Mobilfunktelefon 1 weiter einen Schalter 12 auf, vorliegend ein Schiebeschalter, mit welchem sich die Tasten der Tastaturen 5, 6 und 7 als auch der Kippschalter 11 zur Einstellung der Lautstärke je nach Schaltposition des Schalters 12 sperren lassen beziehungsweise freigeben lassen.

Durch entsprechende Betätigung der Tasten 8, 9 oder 10 wird vorliegend seitens des Mobilfunktelefons 1 jeweils ein entsprechender Nutzer, vorliegend Person 1 ("Father"), Person 2 ("Wife") oder Person 3 ("Daughter") als Nutzer des Mobilfunktelefons 1 aktiviert. Durch Betätigung der Tasten 8, 9 oder 10 der als Eingabeeinheit dienenden Tastatur 7 wird dabei seitens des Mobilfunktelefons 1 eine Kennung aktiviert, welche unter Nutzung eines Mobilfunkteilnehmer-Identifikations-Moduls, vorliegend einer hier nicht explizit dargestellten SIM-Karte, dem jeweiligen Nutzer einen authentifizierenden Zugang zu dem Mobilfunknetz ermöglicht. Durch Aktivierung beziehungsweise Auswahl der Kennung durch Tastenbetätigung 8, 9 oder 10 wird dabei seitens des Mobilfunktelefons 1 in einer hier nicht explizit dargestellten Speichereinheit zur Speicherung von nutzerindividuellen Einstellungen und/oder Funktionen zur Nutzung des Mobilfunktelefons 1 und/oder zur Nutzung von Kommunikationsdiensten des Mobilfunknetzes das entsprechend in der Speichereinheit erfasste jeweilige Nutzerprofil eines Nutzers aktiviert.

Zur mobilfunknetzseitigen Unterscheidung seitens des Mobilfunknetzes wird die jeweils aktivierte Kennung des jeweiligen Nutzers der SIM-Karte zugeordnet, vorzugsweise in einer mobilfunknetzseitigen Datenbank zur Erfassung und/oder Verwaltung von SIM-Karten. Die SIM-Karte ist dabei ausgebildet, mehrere Nutzerprofile anhand der vorliegend durch Tastenbetätigung 8, 9 oder 10 ausgewählten beziehungsweise aktivierten Kennung die entsprechende Kennung zu verwalten und auszuwerten. Die Kennung wird im Rahmen der Nutzung von Kommunikationsdiensten des Mobilfunknetzes von dem Mobilfunktelefon 1 an das Mobilfunknetz übertragen beziehungsweise im umgekehrten Fall von dem Mobilfunknetz an das Mobilfunktelefon 1 übertragen, je nach dem ob vom Mobilfunktelefon 1 Kommunikationsdienste abgehen oder für dieses eingehen. Mobilfunknetzseitig wird die Kennung einem Vergleich mit in einer mobilfunknetzseitigen Datenbank im Zusammenhang mit der SIM-Karte erfassten und/oder verwalteten Kennungen unterzogen. Im Zusammenhang mit der Nutzung verschiedener Nutzerprofile von Nutzern eines Mobilfunktelefons 1 unter Verwendung einer einzigen SIM-Karte ergeben sich die nachfolgend beispielhaft aufgeführten Anwendungsszenarien;

Die Tasten 8, 9 und 10 der Eingabeeinheit 7 sind vorliegend in einem Bereich oberhalb der als Display 2 ausgebildeten Anzeigeeinheit 2 angeordnet. Die als Eingabeeinheit 5 und 6 dienenden Tastaturen 5 und 6 sind vorliegend in einem Bereich unterhalb der als Display 2 ausgebildeten Anzeigeeinheit 2 angeordnet. Dabei sind die Tasten der als Eingabeeinheit 6 dienenden Tastatur vorliegend unmittelbar unterhalb der Anzeigeinheit 2, also an dieser angrenzend, angeordnet. Die drei Tasten 8, 9 und 10 der Eingabeeinheit 7 sind vorliegend hinsichtlich ihrer Abmessungen größer als die Tasten der als Tastaturen 5 und 6 dienenden Eingabeeinrichtungen 5 und 6 ausgebildet. Ferner sind die Tasten 8, 9 und 10 der Eingabeeinheit 7 ausgebildet unterschiedlich farbig zu leuchten, wozu die Tasten 8, 9 und 10 der Eingabeeinheit 7 vorliegend jeweils eine Hintergrundbeleuchtung aufweisen und entsprechend unterschiedlich farbig transparent sind. In Abhängigkeit des jeweils aktivierten Nutzers des Mobilfunktelefons 1 leuchten die entsprechenden Tasten 8, 9 oder 10 der Eingabeeinheit 7 auf, so dass anhand der Tasten 8, 9 oder 10 der Eingabeeinheit 7 des Mobilfunktelefons 1 selbst erkennbar ist, welcher Nutzer für das Mobilfunktelefon 1 gerade aktiviert ist.

Die Tasten 8, 9 oder 10 der Eingabeeinheit 7 des Mobilfunktelefons 1 können so insbesondere zur optischen Wiedergabe von seitens des Mobilfunktelefons 1 für den jeweiligen Nutzer nutzbare Informationen repräsentierenden Signalen genutzt werden, welche beispielsweise durch ein entsprechendes Leuchten, vorzugsweise mit einem Blinklicht, seitens des Mobilfunktelefons 1 den jeweiligen Nutzer entsprechend der Tastenaktivierung 8, 9 oder 10 signalisieren. Insgesamt wird durch die Tasten 8, 9 oder 10 sowohl die Auswahl des jeweiligen Nutzers als auch die Wahmehmung der aktivierten Auswahl desselben vereinfacht.

Die über die Tasten 8, 9 oder 10 der Eingabeeinheit 7 erfolgende Nutzereinstellung durch Tastenbetätigung erlaubt seitens des Mobilfunktelefons 1 eine Einstellung verschiedener Nutzerprofile. Ein Nutzerprofil umfasst dabei die folgenden Funktionen beziehungsweise Funktionalitäten:
- Kontakt/Adressbuch (contacts/address-book) für jeden Nutzer (vorliegend Person 1 "Father", Person 2 "Wife" und Person 3 "Daughter");
- Raum für private Nachrichten, beispielsweise einen Speicherbereich für eingehende Nachrichten, einen Speicherbereich für ausgehende Nachrichten (private messages) und/oder einen Bereich für Entwurfsnachrichten für jeden Nutzer (vorliegend Person 1 "Father", Person 2 "Wife" und Person 3 "Daughter");
- Aufzeichnung privater Gespräche/Kommunikationsdienste für jeden Nutzer (vorliegend Person 1 "Father", Person 2 "Wife" und Person 3 "Daughter"), beispielsweise für die zuletzt geführten Telefonate (eingehende und/oder ausgehende Telefonate) (private call log space);
- Individualisierung hinsichtlich Klingelton und/oder Hintergrundbild oder dergleichen (Personalisation);
- Zeiterfassung und/oder Gebührenerfassung für Telefonate (eingehende/ausgehende Telefonate); die Aktivierung des jeweiligen Nutzerprofils erfolgt über Betätigung der Tasten 8, 9 oder 10; ergänzend kann nach entsprechender Tastenbetätigung zur Nutzerauswahl für jeden Nutzer eine Sicherheitsabfrage durch Eingabe eines PIN-Codes erfolgen, so dass eine erhöhte Sicherheit hinsichtlich der Nutzerauswahl gegeben ist.

Für den Fall das als Nutzer Person 3 "Daughter" durch Betätigung der Taste 10 aktiviert ist, und ein Anruf für Peson 3, beispielsweise eine Freundin von "Daughter" eingeht, wobei die Freundin, "Susan" im Adressbuch des Nutzers "Daughter" erfasst ist, wird der eingehende Anruf der Freundin "Susan" durchgestellt. Sofern als Nutzer des Mobilfunktelefons 1 Person 1 "Father" oder Person 2 "Wife" durch Betätigung der Tasten 8 oder 9 aktiviert sind und die

Freundin "Susan" von "Daughter" anruft, wird der Anruf von "Susan" nicht auf das Mobilfunktelefon 1 an "Father" durchgestellt, sofern "Susan" nicht im Adressbuch von "Father" enthalten ist. In diesem Fall wird ein Besetztsignal an das Mobilfunknetz gesendet. So wird zum einen die Person "Father" nicht gestört und zum anderen die Privatsphäre von der Person 3 "Daughter" respektiert.

Bei einem seitens des Mobilfunktelefons 1 eingehenden Anruf einer Person, welche in keinem der Adressbücher der seitens des Mobilfunktelefons 1 eingerichteten Nutzer (Person 1, Person 2, Person 3) registriert ist, wird der eingehende Anruf auf das Mobilfunktelefon 1 durchgeschaltet, unabhängig davon, welcher Nuzer (Person 1, Person 2 oder Person 3) gerade als aktiver Nutzer des Mobilfunktelefons 1 aktiviert ist. Der eingehende Anruf wird hinsichtlich seiner Rufnummer mit sämtlichen in den Adressbüchern der eingerichteten Nutzer erfassten Rufnummern verglichen und bei Feststellung einer nicht gegebenen Übereinstimmung der Anruf durchgestellt.

Für jeden Nutzer des Mobilfunktelefons 1 sind unterschiedliche Signalisierungssignale (Klingeltöne) einstellbar, so dass schon bei der Signalisierung eines eingehenden Anrufs anhand des Klingeltons feststellbar ist, für welchen Nutzer der Anruf vorgesehen ist. Bei einem eingehenden Anruf für sämtliche Nutzer des Mobilfunktelefons 1, also im Falle eines eingehenden Anrufs einer Person mit einer Rufnummer, welche in keinem der Adressbücher der eingerichteten Nutzer des Mobilfunktelefons 1 vorgesehen ist, wird vorteilhafterweise ein weiterer Signalisierungston und/oder Klingelton zur Anzeige des eingehenden Anrufs verwendet, so dass schon anhand dieses Klingeltons erkennbar ist, dass es sich um einen Anruf handelt, welcher von sämtlichen Nutzern des Mobilfunktelefons 1 annehmbar ist.

Das in der Figur der Zeichnung dargestellte und im Zusammenhang mit diesem beschriebene Ausführungsbeispiel als auch die Anwendungsszenarien desselben dienen lediglich der Erläuterung der Erfindung und sind für diese nicht beschränkend.

### Bezugszeichenliste:

- 1: mobiles Endgerät/Mobilfunktelefon
- 2: optische Anzeigeeinheit/Display
- 3: akustische Anzeigeeinheit/Lautsprecher
- 4: akustische Eingabeeinheit/Mikrofon
- 5: Eingabeeinheit/Tastatur
- 6: Eingabeeinheit/Tastatur
- 7: Eingabeeinheit/Tastatur
- 8: Taste/Nutzerauswahl (Person 1)
- 9: Taste/Nutzerauswahl (Person 2)
- 10: Taste/Nutzerauswahl (Person 3)
- 11: Schalter Lautstärke
- 12: Schalter Tastensperre

## Patentansprüche

1. Verfahren zum Betreiben eines in einem Mobilfunknetz nutzbaren mobilen Endgerätes (1),
wobei
ein authentifizierender Zugang des mobilen Endgerätes (1) zu dem Mobilfunknetz unter Nutzung eines Mobilfunkteilnehmer-Identifikations-Moduls (SIM-Karte) erfolgt und
das mobile Endgerät (1) von wenigstens zwei Nutzern mit Jeweils nutzerindividuellen Einstellungen und nutzerindividuellen Funktionen zur Nutzung von Kommunikationsdiensten des Mobilfunknetzes nutzbar ist,
wobei während deckungsgleicher Zeiteinheiten eine Nutzung des mobilen Endgerätes (1) nur für einen Nutzer ermöglicht wird,
**dadurch gekennzeichnet,**
**dass**
seitens des mobilen Endgerätes (1)
und seitens des Mobilfunknotzes
zur Ermögllchung eines vereinfachten nutzerindividuellen Betriebs des mobilen Endgerätes (1) Im Mobilfunknetz zwischen den wenigstens zwei Nutzern des mobilen Endgerätes (1) anhand wenigstens einer den jeweiligen Nutzern eindeutig zugeordneten Kennung unterschieden wird.,
wobei
zur mobilfunknetzseitigen Unterscheidung die Kennungen des jeweiligen Nutzers seltens des Mobilfunknetzes dem Mobilfunktellnehmer-Identifikations-Modul (SIM-Karte) In wenigstens einer mobilfunknetzseitigen Datenbank zur Erfassung und/oder Verwaltung von Mobilfunktellnehmer-Identifikations-Modulen (SIM-Karten) zugeordnet werden,
und **dass**
die Kennung im Rahmen der Nutzung von Kommunikationsdiensten des Mobilfunknetzes
von dem mobilen Endgerät (1) an das Mobilfunknetz beziehungsweise von dem Mobilfunknetz an das mobile Endgerät (1) übertragen wird,
wobei
die nutzerindividuellen Einstellungen des mobilen Endgerätes und die nutzerindividuellen Funktionen zur Nutzung von Kommunikationsdiensten des Mobilfunknetzes
durch Nutzung wenigstens einen seitens des mobilen Endgerätes (1) eingehenden Kommunikationsdienstes des Mobilfunknetzes oder
einer seitens des mobilen Endgerätes, (1) eingehenden Nachricht eines Kommunikationadienstes des Mobilfunknetzes aktiviert werden.

2. Verfahren nach Anspruch 1, **dadurch gekennzeichnet, dass** zudem die Kennung und/oder die nutzerindividuellen Funktionen zur Nutzung des mobilen Endgerätes durch Nutzung wenigstens eines seitens des mobilen Endgerätes (1) eingehenden Kommunikationsdienstes des Mobilfunknetzes oder einer seitens des mobilen Endgerätes (1) eingehenden Nachricht eines Kommunikationsdienstes des Mobilfunknetzes aktiviert werden.

3. Verfahren nach Anspruch 1 oder Anspruch 2, **dadurch gekennzeichnet, dass** seltens des mobilen Endgerätes (1) signalisiert wird, welcher Nutzer aktiviert ist.

4. Verfahren nach einem der Ansprüche 1 bis 3, **dadurch gekennzeichnet, dass** die Unterscheidung zwischen den Nutzern anhand wenigstens einer der den jeweiligen Nutzern seitens des mobilen Endgerätes (1) zugeordneten nutzerindividuellen Einstellungen und/oder Funktionen zur Nutzung des mobilen Endgerätes (1) und/oder von Kommunikationsdiensten des Mobilfunknetzes erfolgt.

5. Verfahren nach einem der Ansprüche 1 bis 4, **dadurch gekennzeichnet, dass** die Kennung und/oder die nutzerindividuellen Einstellungen und/oder Funktionen zur Nutzung des mobilen Endgerätes (1) und/oder von Kommunikationsdiensten des Mobilfunknetzes durch wenigstens eine Betätigungseingabe seitens einer Eingabeeinheit (7, 8, 9, 10) des mobilen Endgerätes (1) aktiviert werden, wobei im Rahmen der Betätigungseingabe vorzugsweise die Eingabe eines nutzerindividuellen Codes erfolgt.

6. Verfahren nach einem der Ansprüche 1 bis 5, **dadurch gekennzeichnet, dass** die von dem mobilen Endgerät (1) an das Mobilfunknetz übertragene Kennung mobilfunknetzseitig wenigstens einem Vergleich mit wenigstens einer der in der mobilfunknetzseitigen Datenbank im Zusammenhang mit dem Mobilfunkteilnehmer-Identifikations-Modul (SIM-Karte) erfassten und verwalteten Kennungen unterzogen wird, vorzugsweise seitens einer die wenigstens eine mobilfunknetzseitige Datenbank nutzenden Recheneinrichtung des Mobilfunknetzes.

7. Verfahren nach einem der Ansprüche 1 bis 6, **dadurch gekennzeichnet, dass** die von dem Mobilfunknetz an das mobile Endgerät (1) übertragene Kennung seitens des mobilen Endgerätes (1), vorzugsweise seitens des Mobilfunkteilnehmer-Identifikations-Moduls (SIM-Karte) des mobilen Endgerätes (1), wenigstens einem Vergleich mit wenigstens einer der seitens des mobilen Endgerätes (1), vorzugsweise seitens des Mobilfunkteilnehmer-Identifikations-Moduls (SIM-Karte) des mobilen Endgerätes (1), erfassten und verwalteten Kennungen unterzogen wird.

8. Verfahren nach einem der Ansprüche 1 bis 7, **dadurch gekennzeichnet, dass** zumindest bei einer Nutzung des mobilen Endgerätes (1) für Kommunikationsdienste des Mobilfunknetzes durch einen ersten Nutzer bei an wenigstens einen anderen eingerichteten Nutzer des mobilen Endgerätes (1) gerichtete Kommunikationsdienste eine Nichterreichbarkeit des wenigstens einen anderen eingerichteten Nutzers des mobilen Endgerätes (1) signalisiert wird, vorzugsweise seitens des mobilen Endgerätes (1) oder seitens des Mobilfunknetzes.

9. Verfahren nach Anspruch 8, **dadurch gekennzeichnet, dass** bei Nichterreichbarkeit des wenigstens einen anderen eingerichteten Nutzers des mobilen Endgerätes (1) an den wenigstens einen anderen eingerichteten Nutzer des mobilen Endgerätes (1) gerichtete Kommunikationsdienste mobilfunknetzseitig auf eine Anrufbeantworterfunktionalität des wenigstens einen anderen Nutzers des mobilen Endgerätes (1) weitergeleitet werden.

10. Verfahren nach einem der Ansprüche 1 bis 9, **dadurch gekennzeichnet, dass** bei kennungslos oder für mehrere Kennungen gültige an das mobile Endgerät (1) gerichtete Kommunikationsdienste des Mobilfunknetzes eine Nutzung des mobilen Endgerätes (1) für alle Nutzer oder die Nutzer der jeweiligen Kennungen ermöglicht wird.

11. Verfahren nach Anspruch 10, **dadurch gekennzeichnet, dass** kennungslose und/oder für mehrere Kennungen gültige Nutzungen des mobilen Endgerätes (1) als weitere Kennung für alle Nutzer des mobilen Endgerätes (1) oder die jeweiligen Nutzer des mobilen Endgerätes (1) eingerichtet werden.

12. Verfahren nach einem der Ansprüche 1 bis 11, **dadurch gekennzeichnet, dass** eine Erkennung das jeweiligen Nutzers, für welchen Kommunikationsdienste des Mobilfunknetzes seitens des mobilen Endgerätes eingehen, anhand einer Authentisierung des Nutzers erfolgt.

13. Verfahren nach Anspruch 12, **dadurch gekennzeichnet, dass** eine Authentisierung des jeweiligen Nutzers seitens des mobilen Endgerätes selbst und/oder seitens des Mobilfunknetzes erfolgt, besonders bevorzugt mittels einer Sprachanalyse.

14. Mobiles Endgerät (1) zur Nutzung in einem Mobilfunknetz,
mit
wenigstens einer Anzeigeeinheit (2, 3) zur Wiedergabe von optischen und/oder akustischen Informationen und/oder Signalen,
wenigstens einer Eingabeeinheit (4, 5, 6, 7) zur Erfassung von optischen und/oder akustischen Informationen und/oder Signalen und/oder zur Steuerung von Funktionen des mobilen Endgerätes,
einer Speichereinheit zur Speicherung von nutzerindividuellen Einstellungen und/oder Funktionen zur Nutzung des mobilen Endgerätes und/oder von Kommunikationsdiensten des Mobilfunknetzes (Nutzerprofil) und
einem einen authentifizierenden Zugang zu dem Mobilfunknetz ermöglichenden Mobilfunkteilnehmer-Identifikations-Modul (SIM-Karte),
wobei
das mobile Endgerät (1) von wenigstens zwei Nutzern mit jeweils nutzerindividuellen Einstellungen und/oder Funktionen zur Nutzung des mobilen Endgerätes (1) und/oder von Kommunikationsdiensten des Mobilfunknetzes nutzbar ist,
wobei
während deckungsgleicher Zeiteinheiten eine Nutzung des mobilen Endgerätes (1) nur für einen Nutzer ermöglicht ist,
**dadurch gekennzeichnet,**
**dass**
das mobile Endgerät (1) ausgebildet und/oder eingerichtet Ist, die seitens eines mobilen Endgerätes ausführbaren Verfahrenschritte eines Verfahrens nach einem der Ansprüche 1 bis 13 auszuführen.

15. Mobiles Endgerät (1) nach Anspruch 14, **gekennzeichnet durch** eine Einrichtung zur Erfassung, Verwaltung und/oder Unterscheidung von Nutzern des mobilen Endgerätes, vorzugsweise anhand einer dem jeweiligen Nutzer zugeordneten Kennung und/oder anhand nutzerindividueller Einstellungen und/oder Funktionen zur Nutzung des mobilen Endgerätes (1) und/oder von Kommunikationsdiensten des Mobilfunknetzes.

16. Mobiles Endgerät (1) nach Anspruch 14 oder Anspruch 15, **dadurch gekennzeichnet, dass** die Kennung und/oder die nutzerindividuellen Einstellungen und/oder Funktionen zur Nutzung des mobilen Endgerätes (1) und/oder von Kommunikationsdiensten des Mobilfunknetzes durch wenigstens eine Betätigungseingabe seitens der Eingabeeinheit (7) des mobilen Endgerätes (1) aktivierbar ist, vorzugsweise durch Betätigung einer dafür vorgesehenen und eingerichteten Taste (8, 9, 10) der Eingabeeinheit (7), besonders bevorzugt in Kombination mit der Eingabe eines nutzerindividuellen Codes.

17. Mobiles Endgerät (1) nach Anspruch 16, **dadurch gekennzeichnet, dass** die Tasten (8, 9, 10) transparent sind und eine Hintergrundbeleuchtung aufweisen, wobei durch ein Aufleuchten der jeweiligen Tasten (8, 9, 10) signallsierbar ist, welcher Nutzer gerade aktiviert ist.

18. Mobilfunkteilnehmer-Identifikations-Modul (SIM-Karte), welches einem in einem Mobilfunknetz nutzbaren mobilen Endgerät (1), vorzugsweise einem mobilen Endgerät gemäß einem der Ansprüche 14 bis 17, einen authentifizierenden Zugang zu einem Mobilfunknetz ermöglicht, **dadurch gekennzeichnet, dass** dieses ausgebildet und/oder eingerichtet ist, die seitens eines Mobilfunktellnehmer-Identifikations-Modul ausführbaren Verfahrensschritte eines Verfahrens nach einem der Ansprüche 1 bis 13 auszuführen.

## Claims

1. A method for operating a mobile terminal (1) which can be used in a mobile radio network,
wherein
an authenticating access of the mobile terminal (1) to the mobile radio network is realized by using a mobile subscriber identification module (SIM card) and
the mobile terminal (1) can be used by at least two users comprising each user individual settings and user individual functions for using communication services of the mobile radio network,
wherein during identical time units, only one user will be enabled to use the mobile terminal (1),
**characterized in**
**that**
the mobile terminal (1)
and the mobile radio network
will distinguish between the at least two users of the mobile terminal (1) by means of at least one identifier that is unequivocally, assigned to the respective users for enabling a simplified user individual operation of the mobile terminal (1) in the mobile radio network,
wherein
for the distinction made by the mobile radio network, the identifiers of the respective user are allocated by the mobile radio network to the mobile subscriber identification module (SIM card) in at least one data base of the mobile radio network for gathering and/or administrating mobile subscriber identification modules (SIM cards),
and **that**
within the scope of the use of communication services of the mobile radio network, the identifier
is transmitted
from the mobile terminal (1) to the mobile radio network respectively from the mobile radio network to the mobile terminal (1),
wherein
the user individual settings of the mobile terminal and the user individual functions for using communication services of the mobile radio network will be activated by using at least one communication service of the mobile radio network incoming on the mobile terminal (1) or a message of a communication service of the mobile radio network incoming on the mobile terminal (1).

2. A method according to claim 1, **characterized in that** furthermore the identifier and/or the user individual functions for using the mobile terminal will be activated by using at least one communication service of the mobile radio network incoming on the mobile terminal (1) or a message of a communication service of the mobile radio network incoming on the mobile terminal (1).

3. A method according to claim 1 or claim 2, **characterized in that** it is signalized on the part of the mobile terminal (1) which user has been activated.

4. A method according to one of the claims 1 through 3, **characterized in that** the distinction between the users is realized by means of at least one of the user individual settings and/or functions for using the mobile terminal (1) and/or communication services of the mobile radio network, which settings and/or functions are assigned to the respective users by the mobile terminal (1).

5. A method according to one of the claims 1 through 4, **characterized in that** the identifier and/or the user individual settings and/or functions for using the mobile terminal (1) and/or communication services of the mobile radio network will be activated by means of at least one confirmation input by means of an input unit (7, 8, 9, 10) of the mobile terminal (1), wherein within the scope of the confirmation input, preferably a user individual code will be input.

6. A method according to one of the claims 1 through 5, **characterized in that** the identifier transmitted by the mobile terminal (1) to the mobile radio network is subjected by the mobile radio network to at least one comparison with at least one of the identifiers gathered and administrated in connection with the mobile subscriber identification module (SIM card) in the data base of the mobile radio network, preferably by means of a computer device of the mobile radio network which uses the at least one data base of the mobile radio network.

7. A method according to one of the claims 1 through 6, **characterized in that** the identifier transmitted by the mobile radio network to the mobile terminal (1) is subjected by the mobile terminal (1), preferably by the mobile subscriber identification module (SIM card) of the mobile terminal (1), to at least one comparison with at least one of the identifiers gathered and administrated by the mobile terminal (1), preferably by the mobile subscriber identification module (SIM card) of the mobile terminal (1).

8. A method according to one of the claims 1 through 7, **characterized in that** at least if the mobile terminal (1) is used by a first user for communication services of the mobile radio network and if communication services are targeted to at least one other set up user of the mobile terminal (1), an inaccessibility of the at least one other set up user of the mobile terminal (1) will be signalized, preferably by means of the mobile terminal (1) or by means of the mobile radio network.

9. A method according to claim 8, **characterized in that** in case of inaccessibility of the at least one other set up user of the mobile terminal (1) communication services targeted to the at least one other set up user of the mobile terminal (1) are forwarded by the mobile radio network to an answering machine functionality of the at least one other user of the mobile terminal (1).

10. A method according to one of the claims 1 through 9, **characterized in that** for communication services of the mobile radio network which have got no identifier or are valid for several identifiers and are targeted to the mobile terminal (1), a use of the mobile terminal (1) will be enabled for all users or for the users of the respective identifiers.

11. A method according to claim 10, **characterized in that** utilizations of the mobile terminal which have got no identifiers and/or are valid for several identifiers (1) will be set up as a further identifier for all the users of the mobile terminal (1) or the respective users of the mobile terminal (1).

12. A method according to one of the claims 1 through 11, **characterized in that** a recognition of the respective user, for whom communication services of the mobile radio network come in on the mobile terminal (1), will be realized by means of an authentication of the user.

13. A method according to claim 12, **characterized in that** an authentication of the respective user is realized by the mobile terminal itself and/or by the mobile radio network, most preferably by means of a voice analysis.

14. A mobile terminal (1) for the use in a mobile radio network,
comprising
at least one display unit (2, 3) for the reproduction of optical and/or acoustical information and/or signals,
at least one input unit (4, 5, 6, 7) for gathering optical and/or acoustical information and/or signals and/or for controlling functions of the mobile terminal,
a storage unit for storing user individual settings and/or functions for using the mobile terminal and/or communication services of the mobile radio network (user profile) and
a mobile subscriber identification module (SIM card) which enables an authenticated access to the mobile radio network,
wherein
the mobile terminal (1) can be used by at least two users comprising each user individual settings and/or user individual functions for using the mobile terminal (1) and/or communication services of the mobile radio network, wherein
during identical time units, only one user will be enabled to use the mobile terminal (1),
**characterized in**
**that**
the mobile terminal (1) is designed and/or adapted to carry out the process steps of a method according to one of the claims 1 through 13 which can be executed on a mobile terminal.

15. A mobile terminal (1) according to claim 14, **characterized by** a device for gathering, administrating and/or distinguishing users of the mobile terminal, preferably by means of an identifier assigned to the respective user and/or by means of user individual settings and/or functions for using the mobile terminal (1) and/or communication services of the mobile radio network.

16. A mobile terminal (1) according to claim 14 or claim 15, **characterized in that** the identifier and/or the user individual settings and/or functions for using the mobile terminal (1) and/or communication services of the mobile radio network can be activated by means of at least one confirmation input by means of the input unit (7) of the mobile terminal (1), preferably by actuating a key (8, 9, 10) of the input unit (7), which key is provided and adapted for this, preferably in combination with the input of a user individual code.

17. A mobile terminal (1) according to claim 16, **characterized in that** the keys (8, 9, 10) are transparent and comprise a backlight, wherein it can be signalized by lighting up of the respective keys (8, 9, 10) which user has just been activated.

18. A mobile subscriber identification module (SIM card) which provides a mobile terminal (1) which can be used in a mobile radio network, preferably a mobile terminal according to one of the claims 14 through 17 with an authenticated access to a mobile radio network, **characterized in that** this one is configured and/or adapted to carry out the process steps of a method according to one of the claims 1 through 13, which can be effected by a mobile subscriber identification module.

## Revendications

1. Procédé de fonctionnement d'un terminal mobile (1) utilisable dans un réseau radio mobile,
dans lequel
un accès authentifiable du terminal mobile (1) au réseau radio mobile est établi en utilisant un module d'identification d'abonné mobile (carte SIM) et
le terminal mobile (1) peut être utilisé par au moins deux utilisateurs comprenant chacun des réglages spécifiques à l'utilisateur et des fonctions spécifiques à l'utilisateur pour utiliser des services de communication du réseau radio mobile,
une utilisation du terminal mobile (1) n'étant rendu possible que pour un utilisateur pendant des unités de temps identiques,
**caractérisé en ce**
**que**
le terminal mobile (1)
et le réseau radio mobile
font une distinction entre les au moins deux utilisateurs du terminal mobile (1) par moyen d'au moins un identifiant attribué de manière univoque aux utilisateurs respectifs pour permettre un fonctionnement spécifique à l'utilisateur et simplifié du terminal mobile (1) dans le réseau radio mobile, dans lequel
pour la distinction à faire par le réseau radio mobile, les identifiants des utilisateurs respectifs sont attribués par le réseau radio mobile au module d'identification d'abonné mobile (carte SIM) dans au moins une base de données du réseau radio mobile destinée à saisir et/ou administrer les modules d'identification d'abonné mobile (cartes SIM),
et **que**
dans le cadre de l'utilisation des services de communication du réseau radio mobile, l'identifiant
est transmis
du terminal mobile (1) au réseau radio mobile ou
du réseau radio mobile au terminal mobile (1),
dans lequel
les réglages spécifiques à l'utilisateur du terminal mobile et les fonctions spécifiques à l'utilisateur pour utiliser des services de communication du réseau radio mobile
sont activés par utilisation d'au moins un service de communication du réseau radio mobile entrant dans le terminal mobile (1) ou d'un message d'un service de communication du réseau radio mobile entrant dans le terminal mobile (1).

2. Procédé selon la revendication 1, **caractérisé en ce que** l'identifiant et/ou les fonctions spécifiques à l'utilisateur pour utiliser le terminal mobile sont en outre activés par utilisation d'au moins un service de communication du réseau radio mobile entrant dans le terminal mobile (1) ou d'un message d'un service de communication du réseau radio mobile entrant dans le terminal mobile (1).

3. Procédé selon la revendication 1 ou la revendication 2, **caractérisé en ce que** le terminal mobile (1) signalise quel utilisateur est activé.

4. Procédé selon l'une des revendications 1 à 3, **caractérisé en ce que** la distinction entre les utilisateurs se fait par moyen d'au moins un des réglages spécifiques à l'utilisateur et/ou des fonctions pour utiliser le terminal mobile (1) et/ou des services de communication du réseau radio mobile, lesquels réglages et/ou fonctions sont attribués aux utilisateurs respectifs par le terminal mobile (1).

5. Procédé selon l'une des revendications 1 à 4, **caractérisé en ce que** l'identifiant et/ou les réglages spécifiques à l'utilisateur et/ou les fonctions pour utiliser le terminal mobile (1) et/ou des services de communication du réseau radio mobile sont activés par au moins une entrée de confirmation par moyen d'une unité d'entrée (7, 8, 9, 10) du terminal mobile (1), l'entrée d'un code spécifique à l'utilisateur se faisant de préférence dans le cadre de l'entrée de confirmation.

6. Procédé selon l'une des revendications 1 à 5, **caractérisé en ce que** l'identifiant transmis du terminal mobile (1) au réseau radio mobile est soumis par le réseau radio mobile à au moins une comparaison avec au moins un des identifiants saisis et administrés en relation avec le module d'identification d'abonné mobile (carte SIM) dans la base de données du réseau radio mobile, de préférence par moyen d'un moyen de calcul du réseau radio mobile lequel utilise l'au moins une base de données du réseau radio mobile.

7. Procédé selon l'une des revendications 1 à 6, **caractérisé en ce que** l'identifiant transmis du réseau radio mobile au terminal mobile (1) est soumis par le terminal mobile (1), de préférence par le module d'identification d'abonné mobile (carte SIM) du terminal mobile (1), à au moins une comparaison avec au moins un des identifiants saisis et administrés par le terminal mobile (1), de préférence par le module d'identification d'abonné mobile (carte SIM) du terminal mobile (1).

8. Procédé selon l'une des revendications 1 à 7, **caractérisé en ce qu'**au moins si le terminal mobile (1) est utilisé par un premier utilisateur pour des services de communication du réseau radio mobile et si des services de communication sont adressés à au moins un autre utilisateur créé du terminal mobile (1), une indisponibilité de l'au moins un autre utilisateur crée du terminal mobile (1) sera signalée, de préférence par le terminal mobile (1) ou par le réseau radio mobile.

9. Procédé selon la revendication 8, **caractérisé en ce que** dans le cas d'une indisponibilité de l'au moins un autre utilisateur créé du terminal mobile (1), des services de communication adressés à l'au moins un autre utilisateur créé du terminal mobile (1) seront transférés par le réseau radio mobile à une fonctionnalité de répondeur de l'au moins un autre utilisateur du terminal mobile (1).

10. Procédé selon l'une des revendications 1 à 9, **caractérisé en ce que** dans le cas des services de communication du réseau radio mobile lesquels n'ont pas d'identifiant ou lesquels sont valables pour plusieurs identifiants et lesquels sont adressés au terminal mobile (1), une utilisation du terminal mobile (1) sera rendue possible pour tous les utilisateurs ou les utilisateurs des identifiants respectifs.

11. Procédé selon la revendication 10, **caractérisé en ce que** des utilisations du terminal mobile (1) lesquels n'ont pas d'identifiant et/ou sont valables pour plusieurs identifiants sont créées en tant qu'un autre identifiant pour tous les utilisateurs du terminal mobile (1) ou les utilisateurs respectifs du terminal mobile (1).

12. Procédé selon l'une des revendications 1 à 11, **caractérisé en ce qu'**une identification de l'utilisateur respectif, pour qui des services de communication du réseau radio mobile entrent dans le terminal mobile, se fait par moyen d'une authentification de l'utilisateur.

13. Procédé selon la revendication 12, **caractérisé en ce qu'**une authentification de l'utilisateur respectif est effectuée par le terminal mobile lui-même et/ou par le réseau radio mobile, de préférence particulière par moyen d'une analyse vocale.

14. Terminal mobile (1) destiné à l'utilisation dans un réseau radio mobile, comprenant
au moins une unité d'affichage (2, 3) destinée à la reproduction des informations et/ou des signaux optiques et/ou acoustiques,
au moins une unité d'entrée (4, 5, 6, 7) destinée à saisir des informations et/ou des signaux optiques et/ou acoustiques et/ou à commander des fonctions du terminal mobile,
une unité de mémorisation destinée à mémoriser des réglages spécifiques à l'utilisateur et/ou des fonctions pour utiliser le terminal mobile et/ou des services de communication du réseau radio mobile (profile d'utilisateur) et
un module d'identification d'abonné mobile (carte SIM) qui permet un accès authentifiant au réseau radio mobile,
dans lequel
le terminal mobile (1) peut être utilisé par au moins deux utilisateurs comprenant chacun des réglages spécifiques à l'utilisateur et/ou des fonctions spécifiques à l'utilisateur pour utiliser des services de communication du réseau radio mobile,
une utilisation du terminal mobile (1) n'étant rendu possible que pour un utilisateur pendant des unités de temps identiques,
**caractérisé en ce**
**que**
le terminal mobile (1) est configuré et/ou adapté pour effectuer les étapes de procédé d'un procédé selon les revendications 1 à 13 qui sont effectuables par un terminal mobile.

15. Terminal mobile (1) selon la revendication 14, **caractérisé par** un dispositif destiné à saisir, administrer et/ou distinguer des utilisateurs du terminal mobile, de préférence par moyen d'un identifiant attribué à l'utilisateur respectif et/ou par moyen des réglages spécifiques à l'utilisateur et/ou des fonctions spécifiques à l'utilisateur pour utiliser le terminal mobile (1) et/ou des services de communication du réseau radio mobile.

16. Terminal mobile (1) selon la revendication 14 ou la revendication 15, **caractérisé en ce que** l'identifiant et/ou les réglages spécifiques à l'utilisateur et/ou les fonctions pour utiliser le terminal mobile (1) et/ou des services de communication du réseau radio mobile peuvent être activés par au moins une entrée de confirmation par moyen de l'unité d'entrée (7) du terminal mobile (1), de préférence en appuyant sur une touche (8, 9, 10) de l'unité d'entrée, laquelle touche est prévue et adaptée pour cela, de préférence particulière en combinaison avec l'entrée d'un code spécifique à l'utilisateur.

17. Terminal mobile (1) selon la revendication 16, **caractérisé en ce que** les touches sont transparentes et comprennent un éclairage de fond, l'allumage des touches respectives (8, 9, 10) signalisant quel utilisateur est actuellement activé.

18. Module d'identification d'abonné mobile (carte SIM) qui permet à un terminal mobile (1) utilisable dans un réseau radio mobile, de préférence à un terminal mobile selon l'une des revendications 14 à 17, un accès authentifiant à un réseau radio mobile, **caractérisé en ce que** celui-ci est configuré et/ou adapté pour effectuer les étapes de procédé d'un procédé selon l'une des revendications 1 à 13 lesquelles sont effectuables par un module d'identification d'abonné mobile.
